# EUROPÄISCHE PATENTANMELDUNG

(11) **EP 1 199 320 A1**
(43) Veröffentlichungstag der Anmeldung: **24.04.2002**
(21) Anmeldenummer: 01123284.0
(22) Anmeldetag: 05.10.2001
(51) Int. Cl.: C08G 18/38, C08G 18/80, C09D 175/02

(54) **Elektroisolierlackbindemittel mit Harnstoff- und/oder Hydantoinstruktur**

(30) Priorität: 17.10.2000 DE 10051392
(71) Anmelder: BAYER AG, 51368 Leverkusen (DE)
(72) Erfinder: Gertzmann, Rolf, Dr., 51377 Leverkusen (DE); Schmalstieg, Lutz, Dr., 50676 Köln (DE); Mazanek, Jan, Dr., 51061 Köln (DE); Hausstätter, Bernd, 51381 Leverkusen (DE)

(57) **Zusammenfassung**

Die vorliegende Erfindung betrifft neuartige Bindemittel für Elektroisolierlacke, wobei sich die erhaltenen Lacke durch eine hohe Temperaturbeständigkeit und gute Löt-bzw. Verzinnbarkeit auszeichnen.

## Beschreibung

Die vorliegende Erfindung betrifft neuartige Bindemittel für Elektroisolierlacke, wobei sich die erhaltenen Lacke durch eine hohe Temperaturbeständigkeit und gute Löt- bzw. Verzinnbarkeit auszeichnen.

Die heutige Elektro- und Elektronikindustrie benötigt große Mengen beschichteter Drähte zur Herstellung von Motoren, Transformatoren, Bildröhren und anderen Produkten. Da das Design moderner Maschinen mehr und mehr nach kleineren Motoren, Spulen, Transformatoren usw. verlangt, und diese bei höherer Temperatur arbeiten als ihr größeres Äquivalent, werden erhöhte Anforderungen an die Temperaturbeständigkeit der Drahtbeschichtungen gestellt. In der vorliegenden Anmeldung wird die Temperaturbeständigkeit über die Erweichungstemperatur der Beschichtung definiert. Eine weitere Anforderung an die Produkte ist in vielen Anwendungen eine zügige Lötbarkeit der Produkte, um die Enden der beschichteten Drähte schnell und auf einfache Weise elektrisch leitend mit anderen Komponenten zu verbinden.

Die heute üblicherweise eingesetzten Elektroisolierlackbeschichtungsmittel umfassen die konventionellen hochtemperaturbeständigen Beschichtungen in denen Polyhydantoine (z.B. FR-A 1 484 694, DE-A 246020), Polyimide, Polyamidimide (z.B. DE-A 3 544 548, DE-A 3 714 033, DE-A 3 817 614) oder Polyesteramidimide (z.B. US-A 3 652 471, US-A 4 997 891, DE-A 3 249 497) die wesentliche Bindemittelkomponente bilden. Drähte, die mit diesen Produkten beschichtet sind, sind unterhalb einer Temperatur von 400 - 450°C nicht verzinnbar.

Im Unterschied dazu ermöglichen Elektroisolierlacke auf Polyurethanbasis eine schnelle Verzinnbarkeit bei vergleichsweise niedrigen Temperaturen. Die Bindemittel der hierbei zum Einsatz gelangenden Drahtlacke basieren auf Kombinationen aus Polyesterpolyolen und Phenol oder Alkanol-blockierten Polyisocyanaten (DE-A 1 170 096 oder DE-A 2 626 175). Eine Verbesserung der Verzinnbarkeit kann durch Kombination von blockierten Polyisocyanaten mit hydroxy-funktionellen Oligourethanen erreicht werden z.B. (DE-A-1 644 794).

In S. Darling, "International Wire Standards-Progress Towards Harmonization" in Proceedings 19th EEI Conference, Chicago 25. Bis 28 Sept. 1989, S. 56 werden zwar Polyesterimide mit einem Temperaturindex von 180°C als "solderable" (lötbar, verzinnbar) bezeichnet, allerdings ist die Verzinnbarkeit ebenfalls erst bei Temperaturen oberhalb von 400°C gegeben.

Polyesterimide mit hohem Hydroxylgruppengehalt, in Kombination mit wärmebeständigen blockierten Polyisocyanaten sind bei 370°C verzinnbar, zeigen gegenüber den üblichen Polyesterimiden aber stark abfallende Eigenschaften bezüglich tan δ Knickpunkt und Erweichungstemperatur. Ähnliche Nachteile weisen auch Amidimid-Polyurethankombinationen auf, die in EP-A 365 877 beschrieben sind. In der EP-A 752 434 wird die Erhöhung der Erweichungstemperatur lötbarer Drähte durch Einführung von Amid-/Imidgruppenhaltigen blockierten Polyisocyanten beschrieben. Im Vergleich zur US-A 4 997 891 wird dadurch zwar eine deutlich verbesserte Lötbarkeit erzielt, doch ist die Erweichungstemperatur nicht verbessert.

Aus EP-A 231 509 sind Carbodiimid- und/oder Uretonimingruppen enthaltende Polyisocyante sowie ihre Verwendung zur Drahtlackierung bekannt. Diese Polyisocyante eignen sich je nach Reaktionspartner zur Herstellung verzinnbarer (Bsp. 1 der EP-A 231 509) oder aber hitzebeständiger Lackdrähte (Bsp. 3 der EP-A 231 509).

Nach der Lehre der EP-A 287 947 werden hitzebeständige Elektroisolierlacke durch Verwendung ungesättigter Carbonsäuren in Kombination mit Carbodiimid- und/oder Uretonimingruppen enthaltenden Polyisocyanaten erhalten. Wird bei der Herstellung des Hydantoinstrukturen aufwiesenden Drahtlacks eine isocyanurathaltige Verbindungen (EP-A 287 947 Bsp. 3) verwendet, so erhält man einen bei 420°C verzinnbaren Drahtlacklack mit einer Erweichungstemperatur von 250°C; enthält die Mischung neben den OH-haltigen Blockierungsmittel keine weiteren OH-Komponenten, so erhält man nicht verzinnbare Produkte mit Erweichungstemperaturen >300°C (EP-A 287 947 Bsp. 2).

Ebenfalls zu hitzebeständigen Lackdrähten führt die Verwendung von N,N',N"-Tris-(2-hydroxyethyl)-isocyanurat als Zusatzmittel für Drahtlacke auf Polyurethanbasis (DE-A 3 133 571).

Die US-A 5,254,659 beschreibt die Herstellung hitzebeständiger, lötbare Drahtlacke aus Polyimiden und imidmodifizierten Polyurethanen. Aufgrund der niedrigen Festkörpergehalte der Bindemittel und den für die Drahtlackindustrie ungewöhnlichen und darüber hinaus vergleichsweise teuren Lösungsmitteln kommt die Verwendung solcher Produkte sicherlich nur in Ausnahmefällen und zur Beschichtung dünner Drähte zum Einsatz.

Zusammenfassend kann festgestellt werden, dass die Lehre des vorbekannten Standes der Technik sich darin erschöpft, Elektroisolierlacke mit hohem Wärmestand (>270°C) herzustellen, die bei 390°C nicht oder nur sehr langsam verzinnbar sind, oder aber solche herzustellen, die bei 390°C schnell verzinnbar sind aber nur einen Wärmestand von ≤ 270°C aufweisen.

Es war daher die Aufgabe der Erfindung, ein Beschichtungsmittel für hitzeresistente Substrate, insbesondere zur Drahtlackierung von Drähten zur Verfügung zu stellen, welches beide Vorteile - Hitzebeständigkeit >270°C einerseits und verbesserte Verzinnbarkeit bei einer Temperatur von 390°C andererseits - in sich vereint.

Diese Aufgabe konnte mit Hilfe der nachstehend näher beschriebenen erfindungsgemäßen Elektroisolierlackbindemittel gelöst werden. Der Erfindung liegt die überraschende Erkenntnis zugrunde, dass durch Verwendung bestimmter Harnstoff- und/oder Hydantoin-Gruppen aufweisender hydroxyfunktioneller Verbindungen Elektroisolierlacke hergestellt werden können, die trotz ihrer exzellenten Temperaturbeständigkeit bei Temperaturen von < 400°C lötbar sind.

Gegenstand der Erfindung sind daher Bindemittel für Elektroisolierlacke aus:
A) mindestens einem Harnstoff- und/oder Hydantoin-Gruppen aufweisenden, hydroxy- und/oder aminofunktionellen Polyurethan
B) mindestens einer Ester- und/oder Imid- und/oder Amid- und/oder Urethangruppen aufweisenden blockierten Isocyanatkomponente
C) organischen Lösemitteln sowie
D) gegebenenfalls weiteren Hilfs- und Zusatzstoffen
dadurch gekennzeichnet, dass die Polyurethankomponente A) hergestellt wird durch Umsetzung von
a) 15 - 40 Gew. % eines organischen Polyisocyanats oder eines Gemisches organischer Polyisocyanate mit
b) 5 - 20 Gew % mindestens eines Asparginsäureesters und
c) 5 - 50 Gew % einer Polyhydroxyverbindung mit einem Molgewicht zwischen 62 und 3000 g/mol in
d) 25 - 50 Gew % eines Lösungsmittels oder eines Lösungsmittelgemisches.

Aus der EP-A 743 333 sind hydroxyfunktionelle Polyurethanprepolymere mit Hydantoin- bzw. Harnstoffstruktur, wie sie auch in den erfindungsgemäßen Drahtlackbindemitteln prinzipiell als Komponente A) einzusetzen sind, bekannt. Gemäß dieser Lehre zeichnen sich diese Verbindungen durch eine verbesserte thermische Stabilität aus und eignen sich besonders als Bindemitteln zur Beschichtung von Stahlblechen. In der US-A 3,549,599 wird die Herstellung von Polyhydantoinen aus Asparaginsäureestern sowie die hohe Temperaturbeständigkeit der damit erhaltenen Produkte beschrieben. Auch in Verbindung mit anderen Veröffentlichungen kann der Fachmann dieser Lehre weder einen Hinweis bzgl. der Herstellung lötbarer, hochtemperaturbeständiger Drahtlackbindemittel entnehmen, noch die Verwendung dieser Substanzen zur Herstellung lötbarer Drahtlackbindemittel.

Zur Herstellung der erfindungsgemäß einzusetzenden hydroxy- und/oder aminofunktionellen Polyurethane A) eignen sich als Ausgangspolyisocyanate a) aromatische, aliphatische oder cycloaliphatische Polyisocyanate, bevorzugt Polyisocyanate eines einheitlichen oder im Mittel durchschnittlichen Molekulargewichts von 140 - 500 mit einer im statistischen Mittel durchschnittlichen NCO-Funktionalität von maximal 2,6.

Solche Polyisocyanate sind beispielsweise 1,4-Phenylendiisocyanat, 2,4- und 2,6-Diisocyanatotoluol (TDI) sowie beliebige Gemische dieser Isomeren, 4,4'-, 2,4'- und 2,2'-Diisocyanatodiphenylmethan (MDI) oder beliebige Gemische dieser Isomeren oder Gemische dieser Isomeren mit ihren höheren Homologen, wie sie in an sich bekannter Weise durch Phosgenierung von Anilin/ Formaldehyd-Kondensaten erhalten werden, 1,5-Naphthylendiisocyanat, 1,4-Butandiisocyanat, 2- Methylpentan-1,5-diisocyanat, 1,5-Hexandiisocyanat, 1,6-Hexandiisocyanat (HDI), 1,3- und 1,4-Cyclohexandiisocyanat sowie beliebige Gemische dieser Isomeren, 2,4- und 2,6-Diisocyanato-1-methylcylohexan sowie beliebige Gemische dieser Isomeren, 3,5,5-Trimethyl-3-isocyanatomethylcylohexanisocyanat (IPDI) und Dicyclohexylmethan-2,4'- und -4,4'diisocyanat und beliebige Gemische dieser Diisocyanate.

Bevorzugt werden als Ausgangspolyisocyanate a) solche mit aromatisch gebundenen Isocyanatgruppen mit einer im statistischen Mittel durchschnittlichen NCO-Funktionalität von 2 bis 2,2 und eines gegebenenfalls im statistischen Mittel durchschnittlichen Molekulargewichts von 174 - 300.

Ganz besonders bevorzugt einzusetzende Diisocyanate sind 2,4-Diisocyanatotoluol und 2,6-Diisocyanatotoluol, die aus diesen Isomeren bestehenden technischen Gemische und 4,4'-, 2,4'- und 2,2'-Diisocyanatodiphenylmethan oder beliebige Gemische dieser Isomeren oder Gemische dieser Isomeren mit ihren höheren Homologen, wie sie in an sich bekannter Weise durch Phosgenierung von Anilin/Formaldehyd-Kondensaten erhalten werden oder auch beliebige Gemische der hier genannten aromatischen Polyisocyanate.

Zur Herstellung der erfmdungsgemäß einzusetzenden hydroxy- und/oder aminofunktionellen Polyurethane A) eignen sich als Komponente b) Asparaginsäureester der allgemeinen Strukturformel (a) 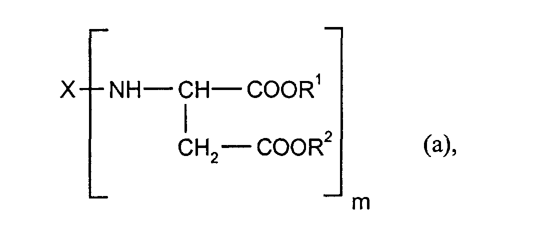 die gemäß der Lehre der EP-A 403 921, DE-A 1 670 812 und DE-A 2 158 945 in bekannter Weise durch Reaktion einer primäre Amingruppen enthaltenden Komponente der Formel (i) 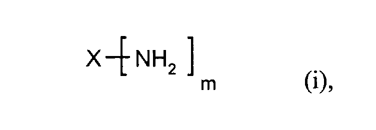 mit Fumarsäureestern und/oder Maleinsäureestern der Formel (ii) erhalten werden, 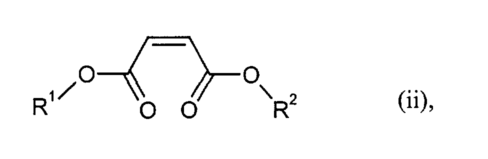 wobei
- X: für einen m-Valenten, gegebenenfalls ein oder mehrere Heteroatome enthaltenden organischen Rest steht, wie er durch Entfernung der primären Aminogruppe bzw. -gruppen aus einem entsprechenden, (cyclo)aliphatisch bzw. araliphatisch gebundene primäre Aminogruppen aufweisenden Mono- oder Polyamin des Molekulargewichtsbereichs 60 bis 6000 erhalten werden kann, und der weitere, gegenüber Isocyanatgruppen reaktive und/oder bei Temperaturen bis 100 ° C inerte funktionelle Gruppen enthalten kann steht.

Als Fumar- bzw. Maleinsäurediester der Formel (ii) eignen sich Verbindungen in den R¹ und R² für organische Reste mit 1 bis 9 Kohlenstoffatom stehen. Bevorzugt sind Reste R¹ und R² mit 1 bis 4 Kohlenstoffatomen, wobei R¹ und R² auch für gleiche Reste stehen können.

Als Amine (i) werden difunktionelle Amine (m = 2) oder Mischungen aus di- und höherfunktionellen Aminen (m = 2 und m > 2) eingesetzt, so dass die mittlere Funktionalität der Asparaginsäureester ≥ 2 ist. Bevorzugt geeignet sind Mischungen aus di- (m = 2) und trifunktionellen (m = 3) Aminen, wobei das Äquivalenzverhältnis von di- zu trifunktionellen Aminen 1:2 bis 5:1 beträgt. Besonders bevorzugt geeignet sind Mischungen, bei denen das Äquivalenzverhältnis von di- zu trifunktionellen Aminen 1:1,5 bis 3:1 beträgt.

Als Beispiele für geeignete difunktionelle Amine (i) stehen Ethylendiamin, 1,2-Diaminopropan, 1,4-Diaminobutan, 2,5-Diamino-2,5-dimethylhexan, 1,5-Diamino-2-methylpentan (Dytek® A der Fa. DuPont), 1,6-Diaminohexan, 2,2,4- und/oder 2,4,4-Trimethyl-1,6-diaminohexan, 1,11-Diaminoundecan, 1,12-Diaminododecan 1-Amino-3,3,5-trimethyl-5-aminomethylcyclohexan (IPDA), 2,4- und/oder 2,6-Hexahydrotoluylendiamin (H₆TDA), Isopropyl-2,4-und/oder 2,6-diaminocyclohexan, 1,3-Bis-(aminomethyl)-cyclohexan, 2,4'- und/oder 4,4'-Diamino-dicyclohexylmethan, 3,3'-Dimethyl-4,4'-diamino-dicyclohexylmethan (Laromin® C 260 der Fa. BASF), die Isomeren, eine Methylgruppe als Kernsubstituenten aufweisenden Diaminodicyclohexylmethane (= C-Monomethyl-diaminodicyclohexylmethane), 3(4)-Aminomethyl-1-methylcyclohexylamin (AMCA) und 1,3-Bis-(aminomethyl)-benzol.

Als Beispiele für Tri- und höherfunktionelle Amine stehen 4-Aminomethyl-1,8-octandiamin; 2,2',2"-Triaminotriethylamin, 1,3,5-Tris-(aminomethyl)-2,4,6-triethylbenzol, Tris-1,1,1-aminoethylethan, 1,2,3-Triamionpropan, Tris-(3-aminopropyl)-amin und N,N,N',N'-Tetrakis-(2-aminoethyl)-ethylendiamin.

Als Amine (i) eignen sich prinzipiell auch Mischungen aus Mono- (m = 1) bzw. Diaminen (m= 2), die weitere bei 20 - 200°C gegenüber Isocyanaten reaktive Gruppen enthalten mit höherfunktionellen Aminen (m > 2), so dass die mittlere Funktionalität der Asparaginsäureester unter Berücksichtigung aller im Temperaturbereich von 20 - 200°C gegenüber Isocyanaten reaktiven Gruppen ≥2 und <3,5 ist.

Als Beispiele für geeignete hydroxyfunktionelle Amine (i) stehen 2-Amino-ethanol, Aminopropanole, 3-Amino-1,2-propandiol, Aminobutanole und 1,3- Diamino-2-propanol.

Prinzipiell einsetzbar sind auch niedermolekulare Polyetherpolyamine mit aliphatisch gebundenen, primären Aminogruppen, wie sie beispielsweise unter der Bezeichnung Jeffamin® von der Firma Huntsman vertrieben werden.

Die Herstellung der Asparaginsäureester b) kann sowohl in Lösung als auch lösemittelfrei durchgeführt werden. In beiden Fällen erfolgt bevorzugt eine äquimolare Umsetzung des Amins mit dem Fumar- bzw. Maleinsäurediester. Zur gezielten Variation anwendungstechnischer Eigenschaften der Drahtüberzüge kann das Äquivalenzverhältnis von Malein- bzw. Fumarsäureester zu Amin i) von 1,2:1 bis 1:2, variiert werden. Für den Fall, dass Mischungen der Asparaginsäureester eingesetzt werden, kann die Herstellung der Asparaginsäureester getrennt oder in einem Reaktionsgefäß erfolgen.

Zur Herstellung der erfindungsgemäß einzusetzenden hydroxy- und/oder aminofunktionellen Polyurethane A) eignen sich als Polyhydroxyverbindugen c) beliebige araliphatische, aliphatische oder cycloaliphatische Polyhydroxyverbindungen, bevorzugt Polyhydroxyverbindungen eines einheitlichen oder im Mittel durchschnittlichen Molekulargewichts von 62 - 3000 mit einer im statistischen Mittel durchschnittlichen OH-Funktionalität von maximal 3. Als niedermolekularere Polyhydroxyverbindugen c) kommen vorzugsweise Diole und/oder Triole des Molekulargewichtsbereichs 62 - 350, weniger bevorzugt jedoch auch Polyhydroxyverbindungen mit Molekulargewichten zwischen 350 und 3.000 in Betracht. Geeignete Polyhydroxyverbindungen c) des Molekulargewichtsbereiches 62 - 350 sind beispielsweise Ethylenglykol, Propandiole, Butandiole, Hexandiole, Di-, Tri- oder Tetraethylenglykol, Di-, Tri- oder Tetrapropylenglykol, Neopentylglykol, 2-Ethyl-1,3-hexandiol, 2,2,4-Trimethyl-1,3-pentandiol, 1,4-Bis(hydroxymethyl)-cyclohexan, 2,2-Bis(4-hydroxycyclo- hexyl)-propan, Glycerin, Hexantriol und N,N',N"-Tris-(2-hydroxyethyl)-isocyanurat (THEIC). Höhermolekulare Polyhydroxyverbindungen c) sind beispielsweise die bekannten Polyhydroxypolyester, wie sie aus Dicarbonsäuren wie Phthalsäure, Isophthalsäure, Terephthalsäure oder Adipinsäure mit überschüssigen Polyolen der obengenannten Art erhalten werden. Als höhermolekulare Polyole c) können ebenfalls an sich bekannte Polyhydroxypolyether, wie sie durch Alkoxylierung von niedermolekularen Startermolekülen zugänglich sind, eingesetzt werden.

Als Polyhydroxyverbindung c) können auch Gemische der vorstehend genannten hydroxyfunktionellen Verbindugen eingesetzt werden.

Als Lösungsmittel d) werden die in der Drahtlackierung üblichen Lösungsmittel benutzt, um die Viskosität der Produkte auf ein für die Verarbeitung notwendiges Niveau einzustellen. Besonders geeignet als Lösungsmittel sind Phenole, Kresole, Xylenole sowie deren technische Isomerengemische, Benzylalkohol, 2-Methoxypropylacetat, Butylacetat, N-Methylpyrrolidon, bei Raumtemperatur flüssige Kohlenwasserstoffe oder Kohlenwasserstoffgemische sowie Gemische der genannten Lösungsmittel. Bevorzugt sind Lösungsmittelgemische der genannten Lösungsmitteln.

Gemäß einer bevorzugten Ausführungsform zur Herstellung der hydroxy- und/oder aminofunktionellen Polyurethane A) wird das Polyisocyanat a) mit dem Lösungsmittel bzw. dem Lösungsmittelgemisch d) im Gewichtsverhältnis von 3:1 bis 1:3, bevorzugt von 1,5: 1 bis 1:1,5 verdünnt. Die isocyanatreaktiven Komponenten b) und c) werden in einem Gewichtsverhältnis von 1:10 bis 4:1, bevorzugt von 1:2 bis 2:1 miteinander vermischt und mit dem Lösungsmittel bzw. Lösungsmittelgemisch d) in einem Gewichtsverhältnis von 1:10 bis 2:1, bevorzugt 1:1,5 bis 1,5:1 verdünnt. Die die isocyanatreaktiven Komponenten b) und c) enthaltende Mischung wird auf eine Temperatur zwischen 10 - 150°C, bevorzugt 20 - 80°C eingestellt. Dieser Mischung wird die Komponente a) enthaltende Lösung zugesetzt. Das Reaktionsgemisch wird solange bei einer Temperatur zwischen 10 und 150°C bevorzugt 20 - 80°C gerührt, bis keine freien Isocyanatgruppen mehr nachweisbar sind.

Vorzugsweise wird die Reaktionsmischung dann bei 80 - 120°C gerührt, um eine Hydantoinbildung einzuleiten oder zu vervollständigen und den dabei abgespaltenen Alkohol gegebenenfalls unter reduziertem Druck abzudestillieren, oder ihn im Reaktionsgemisch zu belassen.

In einer weiteren Ausführungsform zur Herstellung der hydroxy- und/oder aminofunktionellen Polyurethane A) wird das Polyisocyanat a) mit dem Lösungsmittel bzw. dem Lösungsmittelgemisch d) im Gewichtsverhältnis von 3:1 bis 1:3, bevorzugt von 1,5:1 bis 1:1,5 verdünnt. Die isocyanatreaktiven Komponenten b) und c) werden in einem Gewichtsverhältnis von 1:10 bis 4:1, bevorzugt von 1:2 bis 2:1 miteinander vermischt und mit dem Lösungsmittel bzw. Lösungsmittelgemsich d) in einem Gewichtsverhältnis von 1:10 bis 2:1, bevorzugt 1:1,5 bis 1,5:1 verdünnt. Die isocyanatreaktive Komponenten b) und c) enthaltende Mischung wird auf eine Temperatur zwischen 10 - 150°C, bevorzugt 20 - 100 °C eingestellt. Diese Mischung wird der die Komponente a) enthaltende Lösung zugesetzt. Das Reaktionsgemisch wird solange bei einer Temperatur zwischen 10 und 150°C bevorzugt 20 - 100°C gerührt, bis keine freien Isocyanatgruppen mehr nachweisbar sind.

In weiteren Ausführungsformen kann das gesamte Lösungsmittel auch zum Verdünnen nur einzelner Komponenten verwendet werden. Eine weitere Ausführungsform zur Herstellung der hydroxy- und/oder aminofunktionellen Polyurethane A) kann beispielsweise in einer zweigeteilten Reaktionsführung bestehen, bei der zunächst das Polyisocyanat a), mit dem Asparaginsäureester bzw. Asparaginsäureestergemisch b) umgesetzt wird, bevor dann die Polyhydroxyverbindugen c) mit dem verbleibendem Polyisocyanat a) zur Reaktion gebracht werden. Eine weitere Ausführungsform kann darin bestehen, dass zunächst nur die polyhydroxyfunktionellen Verbindungen c) zu dem Polyisocyanat a) gegeben werden und erst nachdem diese abreagiert sind, wird der Asparaginsäureester bzw. das Asparaginsäureestergemisch b) zum Isocyanat gegeben.

Zur Beschleunigung der Reaktion der NCO Gruppen mit gegenüber NCO-Gruppen reaktiven Verbindungen können die in der Polyurethanchemie bekannten und im Kunstoffhandbuch (Hrsg. Becker/Braun), Bd. 7, Polyurethane, S. 92 ff, Carl Hanser Verlag, München Wien 1983) beispielhaft beschriebenen Katalysatoren verwendet werden. Die Katalysatoren werden gegebenenfalls in einer Menge von 0,01 bis 5,0 % bezogen auf die Polyisocyante a) eingesetzt.

Die erfindungsgemäßen Bindemittel für Drahtlacke werden hergestellt durch Abmischung der hydroxy- und/oder aminofunktionellen Polyurethane A) mit in der Drahtlackbeschichtungstechnologie an sich bekannten, blockierten Lackpolyisocyanaten B) organischen Lösungsmitteln C) und gegebenenfalls Hilfs- und Zusatzstoffen D) bei Raumtemperatur, wobei die gegenüber Isocyanaten reaktive Komponente A) in solchen Mengen eingesetzt wird, dass ein Äquivalentverhältnis von hydroxy- und/oder aminofunktionellen Gruppen der Komponente A) zu blockierten Isocyanatgruppen der Komponente B) von 1:2 bis 1,5:1 vorzugsweise 1:1,5 bis 1,3:1 eingehalten wird.

Als blockierte Lackpolyisocyanate B) einsetzbar sind die aus der Drahtlacktechnologie an sich bekannten blockierte Isocyantendgruppen aufweisenden Harze mit Ester- und/oder Amid- und/oder Imid- und/oder Urethanstrukturen. Bevorzugt einsetzbar als Komponente B) sind Polyamidimide und/oder Polyimide mit einem Amid- und/oder Imidstrukturanteil von 0,5 - 10 Gew.% (berechnet als -CO-N<, MG = 42). Besonders bevorzugt einsetzbar als Komponente B) sind mit blockierten NCO-Gruppen terminierte Polyurethane mit einem Urethangruppengehalt von 2 - 20 Gew.% und insbesondere mit einem Urethangruppengehalt von 4 - 15 Gew.%.

Als Lösemittelkomponente C) kommen alle in der Lacktechnologie üblichen organischen Lösemittel in Betracht, die gegenüber Isocyantgruppen inert sind, wie z.B. Ethylacetat, Butylacetat, Ethylenglykolmonomethyl- oder -ethylacetat, 1-Methoxypropyl-2-acetat, 2-Butanon, 4-Methyl-2-pentanon, Cyclohexanon, Toluol, Xylol, Solventnaphtha oder deren Gemische. Ebenfalls verwendbar, jedoch weniger bevorzugt sind Weichmacher wie z.B. solche auf Basis von Phosphorsäure-, Sulfonsäure- oder Phthalsäureester. Außer den gegenüber NCO-Gruppen inerten Lacklösemitteln ist es aber auch möglich, anteilig gegenüber NCO-Gruppen reaktive Lösungsmittel mitzuverwenden. Geeignet sind bevorzugt monofunktionelle, aliphatische, cycloaliphatische, araliphatische Alkohole oder auch Phenole wie z.B. Isopropanol, n-Butanol, n-Octanol, 2-Methoxyethanol, 2-Ethoxyethanol, Diethylenglykolmonomethylether, Diethylenglycolmonoethylether, 1-Methoxy-2-propanol, Cycloalkonole wie Benzylalkohol, oder Phenole wie Kresol, Xylenol sowie deren technische Isomerengemische.

Als Hilfs- und Zusatzstoffe D) können die aus der Elektroisolierlacktechnologie an sich bekannten Katalysatoren, Pigmente und/oder Fließmittel erfindungsgemäß eingesetzt werden.

Die erfindungsgemäßen Elektroisolierlackbindemittel sind bei Raumtemperatur oder mäßig erhöhter Temperatur (bis ca. 50°C) lagerbeständig und reagieren beim Erhitzen auf Temperaturen oberhalb 60°C, vorzugsweise von 100 - 500°C und insbesondere von 180 - 400°C unter gleichzeitigem Verdampfen der gegebenenfalls vorliegenden flüchtigen Bestandteile zu vernetzten Kunststoffen aus. Die Applikation der Lacke erfolgt nach den an sich bekannten Tauch-, Rollenauftrags-, Düsen oder Saugfilzverfahren, wobei sich die Trocknung, d.h. die Aushärtung der Lackschichten in den üblichen Trockenöfen innerhalb eines Temperaturbereiches von 100 - 500°C, und insbesondere von 180 - 400°C anschließt.

Bei den Eigenschaften der erfindungsgemäßen Elektroisolierlackbindemittel sind insbesondere die gute Lötbarkeit, die hohe Erweichungs- und hohe Hitzeschocktemperatur der erhaltenen Produkte im Vergleich zu herkömmlichen bekannten Produkten des Standes der Technik hervorzuheben. Wegen der ausgezeichneten elektrischen und mechanischen Eigenschaften der erfindungsgemäßen Bindemittel eignen sich die Produkte auch zur Herstellung von Isoliergeweben oder zur Imprägnierung von Elektromotoren.

### Beispiele

### Beispiel 1

### Herstellung eines Asparaginsäureesters

53,6 g 4-Aminomethyl-1,8-octandiamin und 109,3 g 2-Mehtyl-1,5-pentandiamin werden vorgelegt und unter Rühren mit 406,2 g Maleinsäuredimethylester versetzt, so dass eine Temperatur von 50°C in der Reaktionsmischung nicht überschritten wird. Anschließend lässt man 20 h bei 60°C nachrühren.

### Beispiel 2

### Herstellung eines Lackpolyisocyanates A)

68,3 g des Asparaginsäureesters aus Beispiel 1 werden mit 75,7 g Trimethylolpropan, 31,3 g 1,3-Butandiol, 36,9 g Diethylenglycol und 227,1 g Kresol homogenisiert und zu einer auf 80 °C erwärmten Mischung aus 242,0 g 4,4'-MDI (Desmodur 44 M® der Bayer AG) gelöst in 227,1 g MPA getropft. Die Reaktionstemperatur wird unter Berücksichtigung der Exothermie bei max. 120°C belassen, bis der freie NCO-Gehalt weniger als 0,5 % beträgt. Der berechnete OH-Gehalt beträgt 2,9 %

### Beispiel 3

### Herstellung eines Lackpolyisocyanates A)

63,8 g des Asparaginsäureesters aus Beispiel 1 werden mit 54,9 g Trimethylolpropan, 25,3 g 1,3-Butandiol, 29,8 g Diethylenglycol und 200,0 g Kresol homogenisiert und zu einer auf 80°C erwärmten Mischung aus 226,1 g 4,4'-MDI (Desmodur 44 M® der Bayer AG) gelöst in 200,0 g MPA getropft. Die Reaktionstemperatur wird unter Berücksichtigung der Exothermie bei max. 120 °C belassen, bis der freie NCO-Gehalt weniger als 0,5 % beträgt. Der berechnete OH-Gehalt beträgt 2,9 %

In den folgenden Beispielen zur Beschichtung von Kupferdrähten wurde eine horizontale Drahtlackieranlage der Fa. Aumann, Espelkamp, BRD, Typ FLK 240 mit einer Ofenlänge von 2,4 m (leicht modifiziert für mittelstarke Drahtdurchmesser) verwendet. Der Kupferdraht von 0,5 mm Durchmesser wurde mittels Düsenapplikation in 7 Durchzügen bei einer Ofentemperatur von 450°C / 500°C mit einer Geschwindigkeit von 12 - 18 m/min lackiert.

Als Reaktionskomponenten für die erfindungsgemäßen, Zerewitinoff Atome enthaltenden Verbindungen (A) wurden Kresol-blockierte Polyisocyanate (B 1 bzw. B 2) verwendet.

Komponente B 1 wurde erhalten indem zu 2500 g 4,4'-MDI (Desmodur® 44 M der Bayer AG) bei 80°C ein Gemisch aus 375,2 g Trimethylolpropan, 1026,0 g Kresol, 155,4 g n-Butanol, 0.4 g Diazabicyclooctan und 8,1 g Dibutylzinndilaurat zugetropft wurde (blockierter NCO-Gehalt beträgt 9,8 %).

Als Komponente B 2 wurde ein handelsübliches blockiertes Polyisocyanat (Desmodur® VP LS 2018) der Fa Bayer verwendet (blockierter NCO-Gehalt beträgt 9,5 %).

### Beispiel 4

### Herstellung eines erfindungsgemäßen Elektroisolierlacks

Zu 131,5 g des gemäß Beispiel 1 hergestellten OH funktionellen Lackharzes werden 94,2 g Polyisocyanat C welches in 87,2 g Kresol und 87,1 g Xylol gelöst wurde, zugesetzt.

Ein mit diesem Lack beschichteter Draht ist bei 390°C innerhalb von 5 sec verzinnbar, der tan δ Knickpunkt liegt bei 180°C, die Erweichungstemperatur nach IEC 851, Teil 6, 4.1.2 beträgt 280°C. Der Lackfilm zeigt hohe Flexibilität: nach 15 % Vordehnung lässt sich der Draht um einen zylindrischen Dorn von 0,5 mm wickeln, ohne dass der Lackfilm Risse aufweist. Der Hitzeschock ist mit 5 % Vordehnung auf einem 0,5 mm Dorn nach 30 min bei 200°C in Ordnung.

### Beispiel 5

### Herstellung eines erfindungsgemäßen Elektroisolierlacks

Zu 163,8 g des gemäß Beispiel 2 hergestellten OH fünktionellen Lackharzes werden 78,1 g Polyisocyanat B 2 welches in 79,1 g Kresol und 79,0 g Xylol gelöst wurde, zugesetzt.

Ein mit diesem Lack beschichteter Draht ist bei 390°C innerhalb von 5 sec verzinnbar, der tan δ Knickpunkt liegt bei 173°C, die Erweichungstemperatur nach IEC 851, Teil 6, 4.1.2 beträgt 280°C. Der Lackfilm zeigt hohe Flexibilität: nach 15 % Vordehnung lässt sich der Draht um einen zylindrischen Dorn von 0,5 mm wickeln, ohne dass der Lackfilm Risse aufweist. Der Hitzeschock ist ohne Vordehnung auf einem 0,5 mm Dorn nach 30 min bei 200°C in Ordnung.

### Beispiel 6

### Herstellung eines erfindungsgemäßen Elektroisolierlacks

Zu 155,4 g des gemäß Beispiel 2 hergestellten OH funktionellem Lackharz werden 82,3 g des Polyisocyanates B 1 welches in 81,2 g Kresol und 81,1 g Xylol gelöst wurde, zugesetzt.

Ein mit diesem Lack beschichteter Draht ist bei 390°C innerhalb von 8 sec verzinnbar, der tan δ Knickpunkt liegt bei 179°C, die Erweichungstemperatur nach IEC 851, Teil 6, 4.1.2 beträgt 290°C. Der Lackfilm zeigt hohe Flexibilität: nach 15 % Vordehnung lässt sich der Draht um einen zylindrischen Dorn von 0,5 mm wickeln, ohne dass der Lackfilm Risse aufweist. Der Hitzeschock ist mit 5 % Vordehnung auf einem 0,5 mm Dorn nach 30 min bei 200°C in Ordnung.

### Beispiel 7

### Herstellung eines erfindungsgemäßen Elektroisolierlacks

Zu 137,7 g des gemäß Beispiel 2 hergestellten OH funktionellem Lackharz werden 91,2 g des Polyisocyanates B 1 welches in 85,6 g Kresol und 85,6 g Xylol gelöst wurde zugesetzt.

Ein mit diesem Lack beschichteter Draht ist bei 390°C innerhalb von 6 sec verzinnbar, der tan δ Knickpunkt liegt bei 179°C, die Erweichungstemperatur nach IEC 851, Teil 6, 4.1.2 beträgt 290°C. Der Lackfilm zeigt hohe Flexibilität: nach 10 % Vordehnung lässt sich der Draht um einen zylindrischen Dorn von 0,5 mm wickeln, ohne dass der Lackfilm Risse aufweist. Der Hitzeschock ist mit 5 % Vordehnung auf einem 0,5 mm Dorn nach 30 min bei 200°C in Ordnung.

### Beispiel 8

### Herstellung eines erfindungsgemäßen Elektroisolierlacks

Zu 123,4 g des gemäß Beispiel 1 hergestellten OH funktionellen Lackharz werden 98,3 g Polyisocyanat B 1, welches in 89,2 g Kresol und 89,1 g Xylol gelöst wurde, zugesetzt.

Ein mit diesem Lack beschichteter Draht ist bei 390°C innerhalb von 9 sec verzinnbar, der tan δ Knickpunkt liegt bei 184°C, die Erweichungstemperatur nach IEC 851, Teil 6, 4.1.2 beträgt 290°C. Der Lackfilm zeigt hohe Flexibilität: nach 5 % Vordehnung lässt sich der Draht um einen zylindrischen Dorn von 0,5 mm wickeln, ohne dass der Lackfilm Risse aufweist. Der Hitzeschock ist mit 5 % Vordehnung auf einem 0,5 mm Dorn nach 30 min bei 200°C in Ordnung.

### Beispiel 9

### Herstellung eines erfindungsgemäßen Elektroisolierlacks

Zu 107 g des gemäß Beispiel 1 hergestellten OH funktionellen Lackharz werden 106,5 g Polyisocyanat B 1, welches in 93,3 g Kresol und 93,1 g Xylol gelöst wurde, zugesetzt.

Ein mit diesem Lack beschichteter Draht ist bei 390°C innerhalb von 6 sec verzinnbar, der tan δ Knickpunkt liegt bei 191°C, die Erweichungstemperatur nach IEC 851, Teil 6, 4.1.2 beträgt 300°C. Der Lackfilm zeigt hohe Flexibilität: nach 5 % Vordehnung lässt sich der Draht um einen zylindrischen Dorn von 0,5 mm wickeln, ohne dass der Lackfilm Risse aufweist. Der Hitzeschock ist mit 5 % Vordehnung auf einem 0,5 mm Dorn nach 30 min bei 200°C in Ordnung.

### Beispiel 10

### Herstellung eines erfindungsgemäßen Elektroisolierlacks

Zu 94,4 g des gemäß Beispiel 1 hergestellten OH funktionellen Lackharz werden 112,8 g Polyisocyanat B 1, welches in 96,2 g Kresol und 96,2 g Xylol gelöst wurde, zugesetzt.

Ein mit diesem Lack beschichteter Draht ist bei 390°C innerhalb von 9 sec verzinnbar, der tan δ Knickpunkt liegt bei 190°C, die Erweichungstemperatur nach IEC 851, Teil 6, 4.1.2 beträgt 290°C. Der Lackfilm zeigt hohe Flexibilität: nach 5 % Vordehnung lässt sich der Draht um einen zylindrischen Dorn von 0,5 mm wickeln, ohne dass der Lackfilm Risse aufweist. Der Hitzeschock ist mit 5 % Vordehnung auf einem 0,5 mm Dorn nach 30 min bei 200°C in Ordnung.

## Patentansprüche

1. Bindemittel für Elektroisolierlacke, bestehend im wesentlichen aus
A) mindestens einem Harnstoff- und/oder Hydantoin-Gruppen aufweisenden, hydroxy- und/oder aminofunktionellen Polyurethan
B) mindestens einer Ester- und/oder Imid- und/oder Amid- und/oder Urethangruppen aufweisenden blockierten Isocyanatkomponente
C) organischen Lösemitteln sowie
D) gegeenenfalls weiteren Hilfs- und Zusatzstoffen
**dadurch gekennzeichnet, dass** die Polyurethankomponente A) hergestellt wird durch Umsetzung von
a) 15 - 40 Gew. % eines organischen Polyisocyanats oder eines Gemisches organischer Polyisocyanate mit
b) 5 - 20 Gew % mindestens eines Asparaginsäureesters und
c) 5 - 50 Gew % einer Polyhydroxyverbindung mit einem Molgewicht zwischen 62 und 3000 g/mol in
d) 25 - 50 Gew % eines Lösungsmittels oder eines Lösungsmittelgemisches.

2. Bindemittel für Elektroisolierlacke gemäß Anspruch 1, **dadurch gekennzeichnet, dass** das zur Herstellung der Harnstoff und/oder Hydantoingruppen aufweisenden hydroxy- und/oder aminofunktionellen Polyurethankomponente A) eingesetzte Polyisocyanat/-gemisch a) aromatisch gebundene Isocyanatgruppen einer im statistischen Mittel durchschnittlichen NCO-Funktionalität von 2 - 2,2 und eines, gegebenenfalls im statistischen Mittel durchschnittlichen, Molekulargewichts von 174 - 300 enthält.

3. Bindemittel für Elektroisolierlacke gemäß Anspruch 1 und 2, **dadurch gekennzeichnet, dass** der zur Herstellung der hydroxy- und/oder aminofunktionellen Polyurethankomponente A) eingesetzte Asparaginsäureester b) di- und höherfunktionelle Amine in einem Verhältnis von 1:2 bis 5:1 aufweist.

4. Bindemittel für Elektroisolierlacke gemäß den Ansprüchen 1 bis 3, **dadurch gekennzeichnet, dass** der eingesetzte Asparaginsäureester b) di- und trifunktionelle Amine in einem Verhältnis von 1:1,5 bis 3:1 aufweist.

5. Bindemittel für Elektroisolierlacke gemäß den Ansprüchen 1 bis 4, **dadurch gekennzeichnet, dass** der zur Herstellung der hydroxy- und/oder aminofunktionellen Polyurethankomponente A) eingesetzte Asparaginsäureester b) neben den sekundären Amingruppen keine weiteren, im Bereich von 10 - 150°C gegenüber Isocyanaten reaktive Gruppen aufweist.

6. Bindemittel für Elektroisolierlacke gemäß den Ansprüchen 1 bis 5, **dadurch gekennzeichnet, dass** die zur Herstellung der hydroxy- und/oder aminofunktionellen Polyurethankomponente A) eingesetzten, gegenüber Isocyanatgruppen reaktiven Asparaginsäureester b) und Polyhydroxyverbindungen c) in einem Gewichtsverhältnis von 1:10 bis 4:1 eingesetzt werden.

7. Bindemittel für Elektroisolierlacke gemäß den Ansprüchen 1 bis 6, **dadurch gekennzeichnet, dass** die zur Herstellung der hydroxy- und/oder aminofunktionellen Polyurethankomponente A) eingesetzten, gegenüber Isocyanatgruppen reaktiven Asparaginsäureester b) und Polyhydroxyverbindungen c) in einem Gewichtsverhältnis von 1:2 bis 2:1 eingesetzt werden.

8. Bindemittel für Elektroisolierlacke gemäß den Ansprüchen 1 bis 7, **dadurch gekennzeichnet, dass** die zur Herstellung der hydroxy- und/oder aminofunktionellen Polyurethankomponente A) eingesetzten Polyhydroxyverbindungen c) Molgewichte zwischen 62 und 350 aufweisen.

9. Bindemittel für Elektroisolierlacke gemäß den Ansprüchen 1 bis 8, **dadurch gekennzeichnet, dass** als Komponente B) urethangruppenhaltige, blockierte Isocyanate eingesetzt werden.

10. Verwendung von Harnstoff und/oder Hydantoingruppen aufweisenden hydroxy- und/oder aminofunktionellen Polyurethanen gemäss Anspruch 1 zur Herstellung von Elektroisolierlacken.

11. Verwendung von Harnstoff und/oder Hydantoingruppen aufweisenden hydroxy- und/oder aminofunktionellen Polyurethanen gemäss Anspruch 10 in Kombination mit blockierten Isocyanatgruppen aufweisenden Polyurethanen zur Herstellung von Elektroisolierlacken.

12. Lacke hergestellt aus Bindemittelgemischen gemäß Ansprüchen 1 bis 9.
